# EUROPEAN PATENT APPLICATION

(11) **EP 4 563 635 A1**
(43) Date of publication of application: **04.06.2025**
(21) Application number: 22955799.6
(22) Date of filing: 17.08.2022
(51) Int. Cl.: C08K 7/22, C08L 75/08, C08G 18/48, A43B 17/00

(54) **COMPOSITE MATERIAL FOR INSOLE**

(71) Applicant: Aerogel R&D Pte. Ltd., Singapore 059413 (SG)
(72) Inventor: PARK, Jong Chul, Singapore 278743 (SG); EYO, Ye Hua, Woodlands Street 13 Singapore 732183 (SG); NEO, Hui Yi, Singapore 598734 (SG); ZHANG, Xiwen, Singapore 643653 (SG); NG, Bao Yi, Singapore 642273 (SG)
(74) Representative: Dentons UK and Middle East LLP
(86) International application number: PCT/KR2022/012243
(87) International publication number: WO 2024/038922

(57) **Abstract**

The composite material for an insole according to one embodiment may comprise polyurethane, which is a reaction product of a polyether-based polyol and an isocyanate compound, and aerogel particles.

## Description

### [Technical Field]

The present invention relates to a composite material for an insole.

### [Background Art]

With the recent increase in interest in health, the demand for functional shoes that make the feet comfortable is increasing.

Since functional shoes are very expensive due to their peculiarity, they have no choice but to be used very limitedly, and a cost burden occurs in them every certain period as a consumer product so that the demand for functional insoles that can be in common use for all shoes is increasing.

However, when the conventional functional insole has an insulation function, it is difficult to protect the shoe wearer's feet due to lack of elasticity or weight lightness, and since the insole with excellent elasticity or hardness has poor insulation performance, there has been a problem in that it is difficult to keep the shoe wearer's feet warm.

### [Disclosure]

### [Technical Problem]

The present exemplary embodiment has been made in an effort to provide a composite material for an insole, having excellent weight lightness, air permeability, and insulation properties while having excellent hardness and elasticity.

### [Technical Solution]

A composite material for an insole according to one exemplary embodiment may include: polyurethane, which is a reaction product of a polyether-based polyol and an isocyanate compound; and aerogel particles.

The polyether-based polyol may have a hydroxyl group value range of 20 to 40 mg KOH/g.

The polyether-based polyol may have a weight average molecular weight range of 3,000 to 7,500.

The polyether-based polyol may have a viscosity range of 1,000 to 4,500 mPa · s at 25° C and a density range of 1.0 to 1.1 g/cm³ at 20° C.

The aerogel particles may have an average particle diameter of 50 µm or less and an average pore size range of 5 nm to 20 nm.

Further, the aerogel particles may have an apparent density range of 0.03 to 0.1 g/cm³, and the aerogel particles may have a hydrophobic functional group on the surface thereof.

The aerogel particles may have a specific surface area (BET) range of 600 to 800 m²/kg, and the aerogel particles may have a thermal conductivity of 0.022 W/mK or less.

The isocyanate compound may contain a hydroxyl group (OH) in a range of 2.5/mol to 3.0/mol.

The isocyanate group (NCO) may be contained in an amount range of 30% by weight to 33% by weight based on the isocyanate compound.

The isocyanate compound may have a viscosity range of 250 to 270 mPa.s at 20° C and a viscosity range of 210 to 230 mPa.s at 25° C.

Further, the isocyanate compound may have a density range of 1.2 to 1.25 g/cm³ at 25° C.

The composite material for an insole according to the present exemplary embodiment may comprise 95% by weight to 99% by weight of polyurethane and 1% by weight to 5% by weight of the aerogel particles based on 100 parts by weight of the composite material for an insole.

Polyurethane may include the isocyanate compound in an amount range of 100 to 110 parts by weight based on 100 parts by weight of the polyether-based polyol.

The composite material for an insole may have an Asker C hardness range of 25 to 35, an Asker F hardness range of 70 to 95, and a density range of 0.08 to 0.13 g/cm³ when measured by ASTM D792.

Further, the composite material for an insole may have a thermal conductivity range of 20 to 40 mW/mK.

### [Advantageous Effect]

In present exemplary embodiment, it is possible to provide a composite material for an insole having excellent insulation properties by having low thermal conductivity that can effectively block external temperature since it contains the aerogel particles.

Further, the composite material for an insole according to the present exemplary embodiment can be applied to various functional shoes by controlling the thickness of an insole manufactured according to the purpose since it secures strength and elasticity for shock absorption and at the same time has excellent air permeability and weight lightness.

### [Description of the Drawings]

FIG. 1 is a heat resistance test result measured at 2 psi for an insole manufactured according to Comparative Example 1.
FIG. 2 is a heat resistance test result measured at 2 psi for an insole manufactured according to Example 1.
FIG. 3 is a heat resistance test result measured at 2 psi for an insole manufactured according to Example 2.
FIG. 4 is a heat resistance test result measured at 2 psi for an insole manufactured according to Example 3.
FIG. 5 is a heat resistance test result measured at 10 psi for the insole manufactured according to Comparative Example 1.
FIG. 6 is a heat resistance test result measured at 10 psi for the insole manufactured according to Example 1.
FIG. 7 is a heat resistance test result measured at 10 psi for the insole manufactured according to Example 2.
FIG. 8 is a heat resistance test result measured at 10 psi for the insole manufactured according to Example 3.

### [Best Mode]

Terms such as first, second and third are used to describe various parts, components, regions, layers and/or sections, but the present invention is not limited thereto. These terms are used only to distinguish one part, component, region, layer or section from other part, component, region, layer, or section. Accordingly, a first part, component, region, layer or section described below may be referred to as a second part, component, region, layer or section within a range that does not depart from the scope of the present invention.

The terminologies used herein are for the purpose of referring to specific embodiments only and are not intended to limit the present invention. The singular forms used herein also include the plural forms unless the phrases clearly indicate the meanings opposite thereto. The meaning of "comprising" used in the specification embodies a particular characteristic, region, integer, step, operation, element and/or component, and it does not exclude the existence or addition of other characteristic, region, integer, step, operation, element and/or component.

When a part is referred to as being "above" or "on" other part, it may be directly above or on the other part, or another part may be involved therebetween. In contrast, when a part referred to as being "directly above" other part, another part is not interposed therebetween.

Further, unless otherwise specified, % means % by weight, and 1 ppm is 0.0001% by weight.

Although not defined differently, all terms including technical and scientific terms used herein have the same meanings as those commonly understood by those skilled in the art to which the present invention pertains. Terms defined in commonly used dictionaries are additionally interpreted as having meanings consistent with the related technical literature and the presently disclosed contents, and unless defined, they are not interpreted in ideal or very formal meanings.

The composite material for an insole according to one embodiment comprises polyurethane, which is a reaction product of a polyether-based polyol and an isocyanate compound, and aerogel particles.

When the polyether-based polyol is used for a composite material for an insole, it has an advantageous effect in that an insole having hydrolysis resistance while having excellent flexural strength and elasticity at low temperatures can be manufactured. Such a polyether-based polyol may have a hydroxyl group value range of 20 to 40 mg KOH/g. When the hydroxyl group value of the polyether-based polyol satisfies the above range, the reactivity of the polyol with respect to the isocyanate group and the strength of resulting polyurethane are excellent.

In addition, the polyether-based polyol may have a weight average molecular weight range of 3,000 to 7,500. When the weight average molecular weight of the polyether-based polyol satisfies the above range, a balance is achieved between the processing conditions (e.g., viscosity) to ensure the comfort of the shoe wearer and the properties of the resulting insole (e.g., flexibility, hardness, and elasticity). That is, since the polyether-based polyol has excellent reactivity and appropriate viscosity, as a result, the elasticity and hardness of polyurethane, which is a reaction product, are excellent.

The polyether-based polyol may have a viscosity range of 1,000 to 4,500 mPa · s at 25° C.

The polyether-based polyol may have a density range of 1.0 to 1.1 g/cm³ at 20° C. When the viscosity and density of the polyether-based polyol satisfy the above ranges, more aerogel particles may be added, and a polyurethane foam having low density characteristics may be implemented at the same time.

In the present embodiment, the aerogel particles may have an average particle diameter range of 50 µm or less, more specifically 1 µm to 45 µm. When aerogel particles are contained in the composite material for an insole according to one embodiment, the insulation performance in a low-temperature region (e.g., -78° C) may be remarkably improved.

The aerogel particles may have an average pore size range of 5 nm to 20 nm, more specifically 9 nm to 11 nm.

When the average particle diameter and average pore size of the aerogel particles satisfy the above ranges, dispersion, and binding of the aerogel particles to the polyether-based polyol are easy, and a mixture of the polyol and the aerogel particles may have an appropriate viscosity. In addition, since the amount of the aerogel particles added to the polyol can be increased, the insulation performance of the composite material for an insole can be further improved.

Meanwhile, the aerogel particles may have an apparent density range of 0.03 to 0.1 g/cm³, more specifically 0.03 to 0.06 g/cm³. When the apparent density of the aerogel particles satisfies the above range, it is possible to secure high insulation performance and volume compared to the addition weight in mixing the aerogel particles with the polyol. Further, if the density is too high, the weight of the final product (insole) may increase since more must be added for the same performance. Conversely, if the density is too low, the viscosity is increased rapidly in mixing the aerogel particles with the polyol, and this limits the amount of aerogel added.

In the present embodiment, the aerogel particles may have a hydrophobic functional group, more specifically a superhydrophobic functional group on the surface thereof. When a hydrophobic functional group is contained on the surface of the aerogel particles, it is advantageous in lowering the moisture absorption effect of the insole and maintaining its original state. When a non-hydrophobic, porous filler is applied, it is easier to absorb moisture such as sweat, and excretion is delayed. This is not a beneficial effect for the insole.

The aerogel particles may have a specific surface area (BET) range of 600 to 800 m²/kg, more specifically 700 to 800 m²/kg. When the specific surface area of the aerogel particles satisfies the above range, high insulation performance compared to the same content can be expected. In the case of porous insulation materials such as aerogel, since the higher the specific surface area, the better the insulation performance, applying aerogel having as high a specific surface area as possible is a way to improve the performance of a product.

The aerogel particles may have a thermal conductivity range of 0.022 W/mK or less, more specifically 0.016 to 0.020 W/mK. When the thermal conductivity of the aerogel particles satisfies the above range, an insole having excellent insulation performance may be manufactured.

Meanwhile, the isocyanate compound may contain a hydroxyl group (OH) in an amount range of 2.5/mol to 3.0/mol. When the isocyanate compound contains a hydroxyl group in the above range, it has sufficient crosslinking properties in the resulting polyurethane foam, and higher strength can be secured.

The isocyanate group (NCO) may be contained in an amount range of 30% by weight to 33% by weight based on the isocyanate compound. When the content of the isocyanate group satisfies the above range, the isocyanate compound exhibits excellent reactivity with a polyol having a higher equivalent weight.

The isocyanate compound may have a viscosity range of 250 to 270 mPa · s at 20° C. The isocyanate compound may have a viscosity range of 210 to 230 mPa · s at 25° C. When the viscosities of the isocyanate compound at 20° C and 25° C satisfy the above ranges, it may be appropriately mixed with other components such as polyols and aerogels.

The isocyanate compound may have a density range of 1.2 to 1.25 g/cm³ at 25° C.

The composite material for an insole according to the present embodiment may comprise 95% by weight to 99% by weight of polyurethane, and 1% by weight to 5% by weight of the aerogel particles based on 100 parts by weight of the composite material for an insole.

In addition, polyurethane may comprise the isocyanate compound in an amount range of 100 to 110 parts by weight based on 100 parts by weight of the polyether-based polyol. When the mixing ratio of the isocyanate compound to the polyether-based polyol satisfies the above range, an appropriate amount of a reaction foaming agent may be added depending on the number of NCOs and the number of OH.

The composite material for an insole according to the present embodiment may have an Asker C hardness range of 25 to 35.

In addition, the composite material for an insole may have an Asker F hardness range of 70 to 95.

The composite material for an insole may have a density range of 0.08 to 0.13 g/cm³ when measured by ASTM D792. In addition, the composite material for an insole may have a thermal conductivity range of 20 to 45 mW/mK.

In the present embodiment, the shoe insole may include, for example, a first cushion layer, a second cushion layer, and a foot bottom surface contact layer. In this case, the first cushion layer is manufactured using the composite material for an insole according to one embodiment, and the second cushion layer attached onto the first cushion layer and manufactured using polyurethane, and the foot bottom surface contact layer attached onto the second cushion layer and brought into contact with the foot bottom of the user may be included.

An adhesive layer may be positioned between the first cushion layer, the second cushion layer, and the foot bottom surface contact layer.

In the case of including the first cushion layer manufactured using the composite material for an insole according to the present embodiment, since it is possible to secure adequate elasticity and hardness while having excellent insulation performance, and the first cushion layer has excellent weight lightness and air permeability, it may be applied to functional shoes for various uses by adjusting the thickness depending on the purpose.

### [Mode for Invention]

Hereinafter, embodiments of the present invention will be described in detail. However, this is presented as an example, and the present invention is not limited thereto, and the present invention is only defined by the scope of the claims to be described later.

### Example 1

### (1) Preparation of Composite Material for Insole

98 g of a polyether-based polyol and 6 g of a silica aerogel powder were put and stirred to prepare a mixed solution. 100 g of MDI was added to 104 g of the mixed solution, stirred, and then supplied to a container and foamed to prepare a composite material for an insole. Foaming was completed within about 5 minutes at room temperature.

The prepared composite material had a density of 0.09 g/cm³, a hardness of 34 (Asker C), and a thermal conductivity of 36 mW/mK.

### (2) Manufacturing of Insole

A first cushion layer was manufactured using the composite material prepared in (1) above.

Next, a second cushion layer was manufactured using a polyurethane foam, and then adhered onto the first cushion layer with an adhesive interposed therebetween.

Thereafter, a foot bottom surface contact layer was manufactured using a nonwoven fabric, and then an insole sample was manufactured by adhering it onto the second cushion layer with an adhesive interposed therebetween.

At this time, the first cushion layer had a thickness of 2.0 mm, and the second cushion layer had a thickness of 3.5 mm.

### Example 2

An insole was manufactured after preparing a composite material for an insole in the same manner as in Example 1 except that it was manufactured to a first cushion layer thickness of 3.5 mm and a second cushion layer thickness of 2.0 mm.

### Example 3

After preparing a composite material for an insole in the same manner as in (1) of Example 1, a first cushion layer was manufactured using it. Next, an insole was manufactured by adhering the foot bottom surface contact layer to the first cushion layer with an adhesive interposed therebetween. At this time, the first cushion layer had a thickness of 5.5 mm.

### Comparative Example 1

An insole was manufactured by adhering only the foot bottom surface contact layer thereto after manufacturing the second cushion layer to a thickness of 5.5 mm without using the first cushion layer in (2) of Example 1.

### Experimental Example 1

Heat resistance was measured with respect to the insoles manufactured according to Examples 1 to 3 and Comparative Example 1.

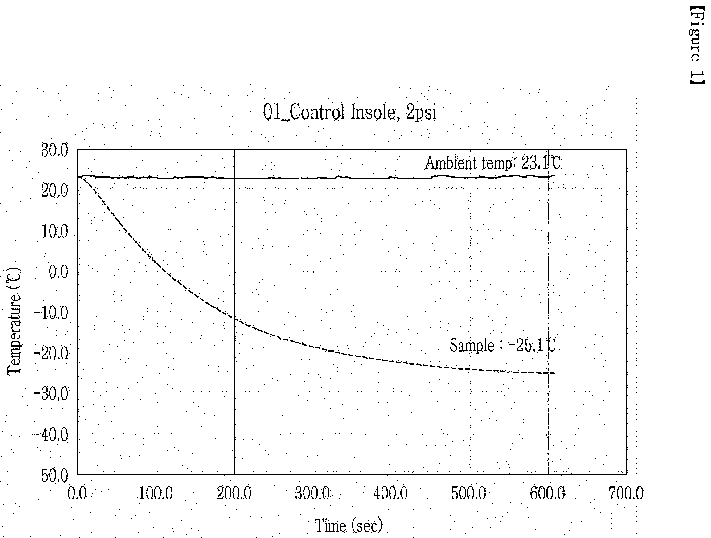

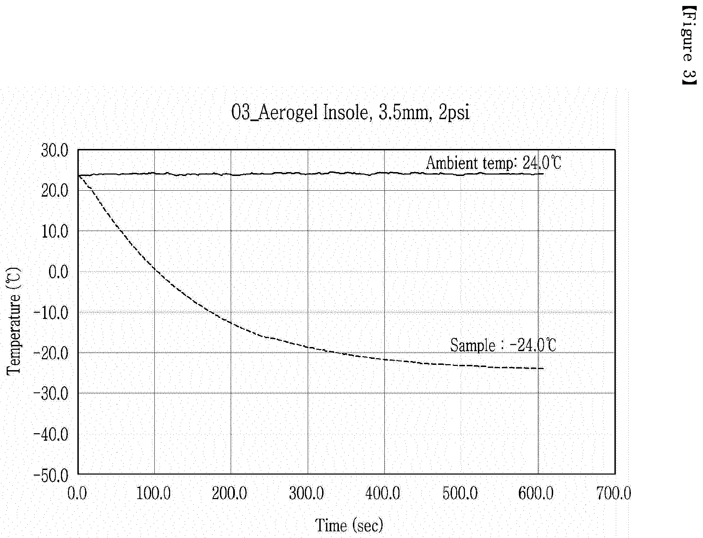

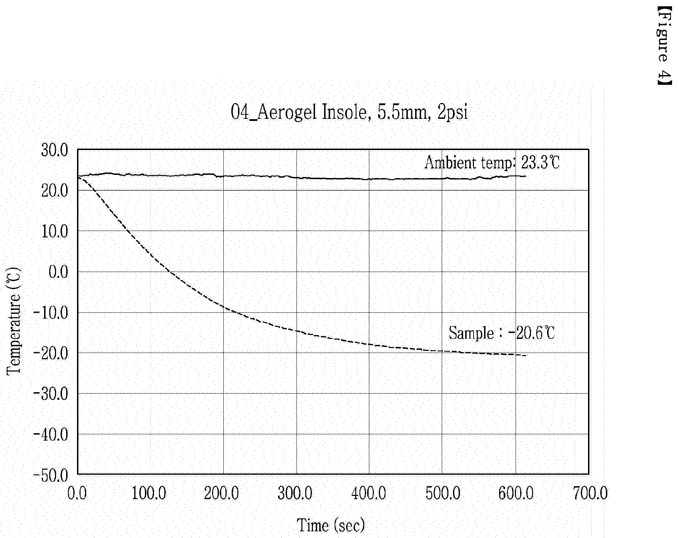

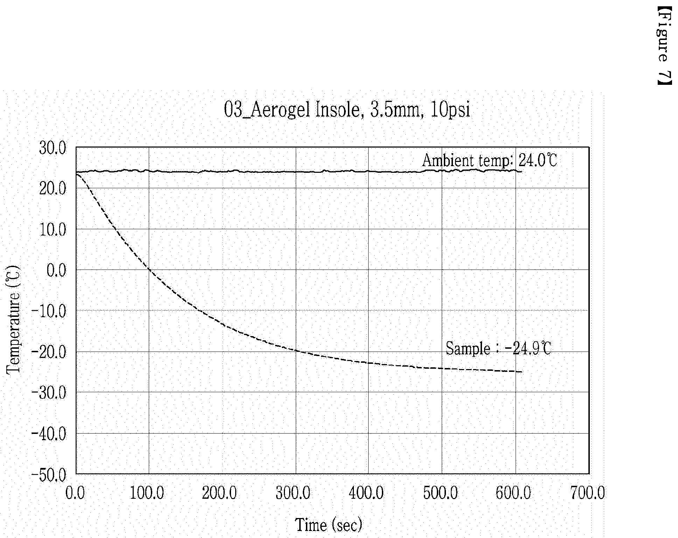

Specifically, heat resistance was measured using INSTRON's heat resistance measuring equipment. Specifically, a dry ice of about -78° C was placed on the measuring table, the sample was placed on the dry ice, and then the temperature was measured using a thermocouple for monitoring heat transfer in a state that pressures described in Table 1 below were applied using a pressurization member. The results are shown in Table 1 and FIGS. 1 to 8 below.

**[Table 1]**

| | weight (g) | thickness (nm) | Asker C hardness | Thermal conductivity (WmK) | Deformation | |
|---|---|---|---|---|---|---|
| | | | | | 2psi | 10psi |
| Comparative Example 1 | 20.3 | 6.0 | 26 | 56 | -25.1 | -32.6 |
| Example 1 | 19.1 | 5.8 | 27 | 44 | -23.9 | -30.3 |
| Example 2 | 18.8 | 5.8 | 30 | 45 | -24.0 | -24.9 |
| Example 3 | 18.5 | 5.8 | 34 | 40 | -20.6 | -21. 8 |

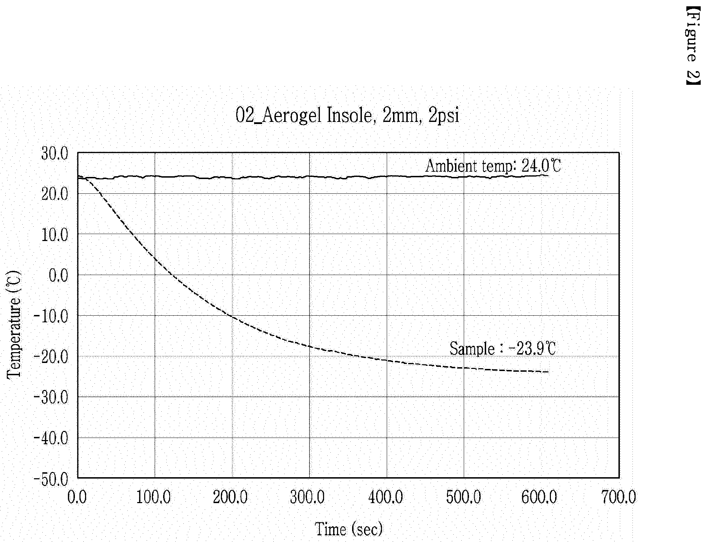

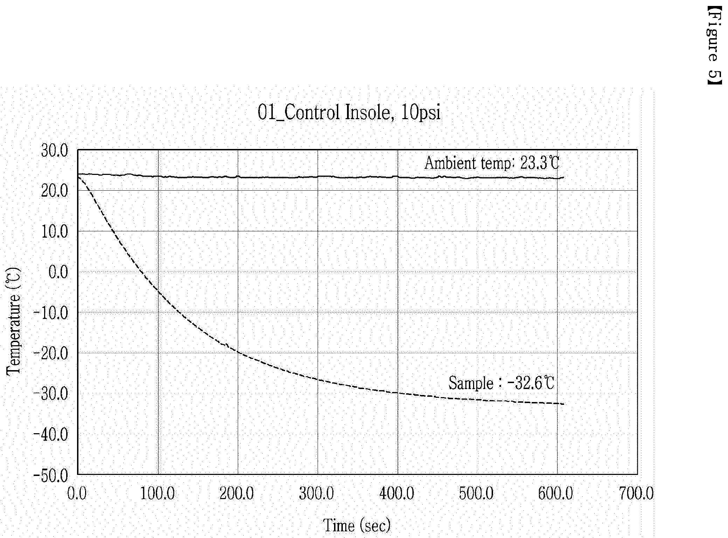

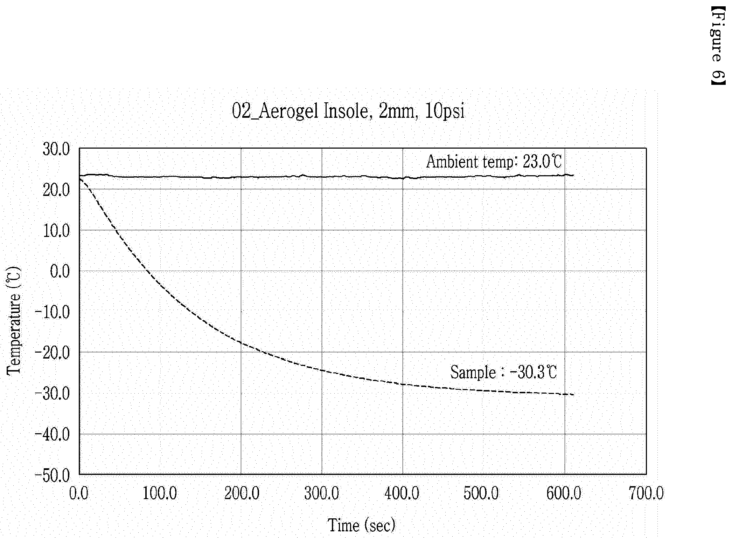

Referring to Table 1, it can be seen that the insoles manufactured according to Examples 1 to 3 have lighter weights than Comparative Example 1 although they further comprise the first cushion layer. That is, they are excellent in weight lightness. Further, it can be confirmed that Examples 1 to 3 have low thermal conductivities and high Asker C hardness values. Next, the result for Comparative Example 1 measured at 2 psi is shown in FIG. 1, the results for Examples 1 to 3 are shown in FIGS. 2 to 4, the result for Comparative Example 1 measured at 10 psi is shown in FIG. 5, and the results for Examples 1 to 3 are shown in FIGS. 6 to 8.

Referring to FIGS. 1 and 5, it can be seen that the sample of the insole manufactured according to Comparative Example 1 has large differences between the ambient temperature and the sample temperature at pressures of 2 psi and 10 psi respectively.

In contrast, referring to FIGS. 2 to 4 and FIGS. 6 to 8, it can be seen that the samples of the insoles manufactured according to Examples 1 to 3 have relatively small differences between the ambient temperature and the sample temperature at pressures of 2 psi and 10 psi respectively compared to Comparative Example 1.

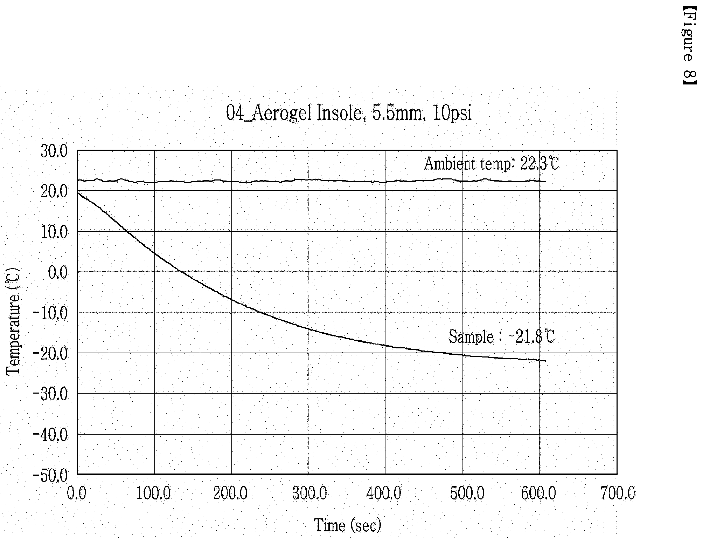

Referring to FIG. 8, it can be seen that the difference between the ambient temperature and the sample temperature at a pressure of 10 psi is remarkably reduced, and thus the heat resistance is very excellent in the case of Example 3.

The present invention is not limited to the embodiments, but can be manufactured in various different forms, and those skilled in the art to which the present invention pertains will be able to understand that the present invention may be implemented in other specific forms without changing the technical spirit or essential features of the present invention. Therefore, it should be understood that the embodiments described above are illustrative in all respects and not restrictive.

## Claims

1. A composite material for an insole, the composite material comprising:
polyurethane, which is a reaction product of a polyether-based polyol and an isocyanate compound; and
aerogel particles.

2. The composite material of claim 1, wherein
the polyether-based polyol has a hydroxyl group value range of 20 to 40 mg KOH/g.

3. The composite material of claim 1, wherein
the polyether-based polyol has a weight average molecular weight range of 3,000 to 7,500.

4. The composite material of claim 1, wherein
the polyether-based polyol has a viscosity range of 1,000 to 4,500 mPa · s at 25° C.

5. The composite material of claim 1, wherein
the polyether-based polyol has a density range of 1.0 to 1.1 g/cm³ at 20° C.

6. The composite material of claim 1, wherein
the aerogel particles have an average particle diameter of 50 µm or less.

7. The composite material of claim 1, wherein
the aerogel particles have an average pore size range of 5 nm to 20 nm.

8. The composite material of claim 1, wherein
the aerogel particles have an apparent density range of 0.03 to 0.1 g/cm³.

9. The composite material of claim 1, wherein
the aerogel particles have a hydrophobic functional group on the surface thereof.

10. The composite material of claim 1, wherein
the aerogel particles have a specific surface area (BET) range of 600 to 800 m²/kg.

11. The composite material of claim 1, wherein
the aerogel particles have a thermal conductivity of 0.022 W/mK or less.

12. The composite material of claim 1, wherein
the isocyanate compound contains a hydroxyl group (OH) in a range of 2.5/mol to 3.0/mol.

13. The composite material of claim 1, wherein
the isocyanate group (NCO) is contained in an amount range of 30% by weight to 33% by weight based on the isocyanate compound.

14. The composite material of claim 1, wherein
the isocyanate compound has a viscosity range of 250 to 270 mPa.s at 20° C.

15. The composite material of claim 1, wherein
the isocyanate compound has a viscosity range of 210 to 230 mPa.s at 25° C.

16. The composite material of claim 1, wherein
the isocyanate compound has a density range of 1.2 to 1.25 g/cm³ at 25° C.

17. The composite material of claim 1, comprising
95% by weight to 99% by weight of polyurethane and 1% by weight to 5% by weight of the aerogel particles based on 100 parts by weight of the composite material for an insole.

18. The composite material of claim 1, wherein
polyurethane
includes the isocyanate compound in an amount range of 100 to 110 parts by weight based on 100 parts by weight of the polyether-based polyol.

19. The composite material of claim 1, wherein
the composite material for an insole has an Asker C hardness range of 25 to 35.

20. The composite material of claim 1, wherein
the composite material for an insole has an Asker F hardness range of 70 to 95.

21. The composite material of claim 1, wherein
the composite material for an insole has a density range of 0.08 to 0.13 g/cm³ when measured by ASTM D792.

22. The composite material of claim 1, wherein
the composite material for an insole has a thermal conductivity range of 20 to 40 mW/mK.
